# FASCICULE DE BREVET EUROPEEN

(11) **EP 3 279 585 B1**
(45) Date de publication et mention de la délivrance du brevet: **19.03.2025**
(21) Numéro de dépôt: 17183846.9
(22) Date de dépôt: 28.07.2017
(51) Int. Cl.: F24S 80/65

(54) **PROCÉDÉ D'ISOLATION D'UN COLLECTEUR SOLAIRE ET COLLECTEUR SOLAIRE SUSCEPTIBLE D'ÊTRE OBTENU PAR LE PROCÉDÉ**
VERFAHREN ZUR ISOLIERUNG EINES SONNENKOLLEKTORS UND SONNENKOLLEKTOR, DER DURCH DAS VERFAHREN ERHALTEN WERDEN KANN
PROCESS FOR INSULATING A SOLAR COLLECTOR AND SOLAR COLLECTOR OBTAINABLE BY THE PROCESS

(30) Priorité: 01.08.2016 FR 1657468
(43) Date de publication de la demande: 07.02.2018
(73) Titulaire: SAINT-GOBAIN ISOVER, 92400 Courbevoie (FR)
(72) Inventeur: BAREYT, Christophe, 60340 Saint-Leu d Esserent (FR)
(74) Mandataire: Saint-Gobain Recherche

(56) Documents cités:
- EP-A1- 2 302 308
- EP-A1- 2 952 826
- EP-A2- 2 522 927
- WO-A1-01/36859
- WO-A2-2009/026913
- WO-A2-2010/028818

## Description

La présente invention se rapporte au domaine de l'isolation thermique, et concerne plus particulièrement l'isolation de collecteurs solaires. Elle concerne plus spécialement l'isolation des collecteurs solaires thermiques à fluide caloporteur, en particulier liquide, notamment de type plans vitrés dans lesquels un fluide caloporteur passe dans un ou des tubes ou serpentin(s). Elle concerne à la fois le collecteur solaire et le procédé d'isolation/de fabrication mis au point.

Il est connu du document EP 2 302 308 A1 un collecteur solaire comprenant une laine minérale colorée, puis un procédé de production de ladite laine minérale colorée, ainsi que l'utilisation de ladite laine minérale colorée dans un collecteur solaire. Le principal objectif de ce document est de fournir un collecteur solaire comprenant un matériau qui possède des propriétés d'isolation efficaces en réduisant ou en évitant la diminution de l'efficacité du collecteur solaire due à l'évaporation de composés chimiques. Dans le document EP 2 952 826 A1, il est décrit un procédé de fabrication d'un collecteur solaire utilisant des particules constituées d'aérogel granulaire comme isolant thermique. Le document WO 01/36859 A1 propose une technique d'isolation d'objets à surfaces tridimensionnelles (en particulier des fours), pouvant être également des collecteurs solaires, permettant d'éviter l'envol de poussière, des problèmes de nettoyage lors de la mise en œuvre de l'isolation par un opérateur et d'éviter l'inhomogénéité de la densité du matériau appliqué dans les espaces à isoler de tels objets.

Un collecteur solaire, ou capteur solaire, le cas échéant aussi qualifié de thermique ou hélio-thermique, est de manière générale un produit ou dispositif conçu pour recueillir l'énergie solaire transmise par rayonnement et la transmettre sous forme de chaleur à un fluide caloporteur (liquide, ou éventuellement gazeux). Cette énergie calorifique transmise peut ensuite être utilisée pour le chauffage de bâtiments, pour la production d'eau chaude ou pour diverses autres applications (climatisation, chauffage de piscines, etc.).

Il existe différents types de collecteurs solaires, de conception plus ou moins complexe et de performances différentes selon notamment les applications envisagées. On distingue généralement trois catégories : les collecteurs (ou capteurs) dits "non vitrés", les collecteurs (ou capteurs) dits "plans vitrés", et les collecteurs (ou capteurs) dits "à tube sous vide".

Les collecteurs non vitrés sont généralement de structure la plus simple, par exemple sous forme de tubes plastiques ou métalliques ("collecteurs moquette"), dans lesquels circule de l'eau, ces tubes n'étant généralement pas isolés, ce dispositif étant surtout adapté aux applications ne nécessitant pas des températures élevées telles que le chauffage des piscines. D'autres collecteurs non vitrés de structure simple sont également des collecteurs dits "sélectifs" utilisant alors un absorbeur métallique, et sont utilisés également pour le préchauffage d'eau ou le chauffage basse température.

Pour les collecteurs plans vitrés, se présentant généralement (initialement ou une fois montés, par exemple, dans un bâtiment) sous forme de caissons munis d'une vitre (ou plaque à base de verre ou de certains matériaux plastiques (ou à base de polymère(s)) transparents) laissant entrer la lumière du soleil, le fluide caloporteur passe généralement dans un serpentin ou une grille hydraulique placé(e) sous une feuille absorbante, un isolant placé dans le caisson (ou châssis) et la vitre utilisée permettant de réduire les déperditions de chaleur. Ces collecteurs, pouvant être de diverses dimensions et dont l'usage est répandu, sont notamment adaptés à la production de l'eau chaude sanitaire et au chauffage des bâtiments.

Pour les collecteurs à tubes sous vide, développés afin d'améliorer les performances des collecteurs plans, le fluide caloporteur circule généralement à l'intérieur d'un tube sous vide, le vide permettant d'améliorer l'isolation, notamment contre les pertes en convection lors de la montée en température. Les collecteurs à tubes sous vide permettent en particulier d'atteindre des hautes températures (150°C) avec des rendements corrects, mais leur fabrication reste complexe.

Hormis le vide ainsi utilisé pour les collecteurs à tubes sous vide, ou l'air pour les collecteurs les plus simples, l'isolant traditionnellement utilisé pour l'isolation des collecteurs solaires, en particulier à l'intérieur des caissons de collecteurs plans vitrés, consiste soit en une mousse, par exemple à base de mélamine ou à base de polyisocyanurate et/ou de polyuréthane, soit en des matelas, ou nappes ou mats ou feutres, de laine minérale, ces mousses et ces matelas étant faciles à trouver dans le commerce et leur tenue en température étant très appréciée pour un coût raisonnable. Ces mousses et matelas sont généralement prédécoupés aux dimensions appropriées puis insérés, notamment manuellement, dans la structure du collecteur, en particulier entre le circuit hydraulique transportant le fluide caloporteur et le fond du collecteur, du côté opposé à celui recevant la lumière.

Cette façon de procéder comporte un certain nombre d'inconvénients :
Il est notamment difficile d'obtenir un contact parfaitement continu avec l'isolant sur toute la surface du circuit transportant le fluide caloporteur, ce circuit se présentant en particulier sous forme de tube(s) de faible diamètre allant d'un bord à l'autre du collecteur en faisant le cas échéant de multiples aller-retours ou ondulations ou boucles ou spires ou lacets, ou serpentin(s), les différentes boucles ou ondulations ou tours étant généralement rapproché(e)s. Le contact entre le matelas de laine minérale ou la mousse et cette structure en serpentin est d'autant plus faible que le matelas ou la mousse, relativement rigide, présente également un profil différent (plat ou ondulé différemment), de même que ledit matelas ou ladite mousse présente généralement une épaisseur, standard, insuffisante (l'épaisseur et la densité des couches de laines minérales utilisées étant notamment limitées par les capacités des lignes de fabrication existantes). Le taux de remplissage de la cavité du collecteur à isoler reste ainsi généralement faible et conduit à une résistance thermique elle aussi faible, la résistance thermique étant proportionnelle à l'épaisseur de l'isolant.

La pose de ces isolants nécessite en outre le découpage des isolants et leur pose manuelle, ces diverses opérations pouvant notamment poser des problèmes à l'opérateur (irritation de la peau, poussière...), notamment dans le cas de l'utilisation des matelas de laine minérale.

Par ailleurs, les isolants peuvent être pourvus de liants permettant d'assurer leur intégrité mécanique, ce qui en contrepartie rend l'isolant peu expansible comme vu précédemment et peut le cas échéant engendrer à haute température des émissions gazeuses indésirables.

L'invention a donc cherché à mettre au point un collecteur solaire amélioré, présentant notamment une meilleure isolation thermique tout en restant simple de fabrication et présentant un coût raisonnable, ainsi qu'une technique d'isolation améliorée permettant d'obtenir un tel collecteur, en particulier une technique d'isolation simple et pratique à mettre en œuvre pour l'opérateur, permettant d'obtenir des bonnes performances d'isolation, notamment améliorées, pour l'isolation de collecteurs solaires.

Ce but a été atteint en premier lieu par le produit selon l'invention, qui est un collecteur solaire tel que défini selon l'objet de la revendication 7.

Selon l'invention, le collecteur est formé d'au moins une paroi, plus spécifiquement d'une paroi formant le fond du collecteur, ou face arrière, par opposition à la face du collecteur recevant la lumière/l'énergie du soleil, ou face avant, l'isolant formé de flocons et/ou nodules de laine(s) ou fibres minérale(s) se trouvant entre le circuit transportant le fluide caloporteur et ladite paroi. L'isolant/la couche d'isolant peut être, ou non, en contact direct avec le circuit transportant le fluide caloporteur, ainsi qu'avec la paroi précitée, et est de préférence au contact du circuit transportant le fluide caloporteur, en particulier en contact direct, c'est à dire sans élément ou feuille ou revêtement intermédiaire.

Plus spécifiquement, le collecteur préférentiellement visé dans la présente invention est généralement formé d'au moins une enceinte, ou caisson ou châssis, au moins en partie rigide (notamment rigide sur au moins une partie de ses faces, en particulier sur ses côtés), ladite enceinte étant en une ou plusieurs parties et délimitant notamment le collecteur solaire sur ses côtés (ou faces de plus petites dimensions ou faces latérales entre la face arrière et la face avant) et sur l'une de ses faces, en particulier la face arrière (la paroi correspondante de l'enceinte formant donc le fond du collecteur). Ladite enceinte est par exemple formée d'un cadre, notamment d'un cadre métallique, présentant généralement quatre côtés et étant de forme parallélépipédique, notamment rectangulaire, et d'une paroi (notamment paroi arrière ou fond du collecteur), généralement rapportée au cadre, c'est-à-dire fabriquée séparément puis assemblée, cette paroi étant en particulier amovible par rapport au cadre, et s'insérant dans et/ou se solidarisant au cadre pour former un caisson ou coffre, cette paroi pouvant par exemple être formée d'une feuille ou d'un panneau d'aluminium.

Plus particulièrement, le collecteur préférentiellement visé dans la présente invention est de type plan vitré et comprend, outre l'enceinte précitée, au moins un vitrage, sous forme d'au moins une plaque de verre, en particulier (de verre) trempé, ou d'un matériau à base de polymères transparent, ce vitrage formant en particulier la face avant du collecteur et s'insérant dans et/ou se solidarisant au cadre précité sur la face restante/ouverte de l'enceinte. Le cas échéant, le vitrage peut présenter un ou des traitements ou revêtements, en particulier un revêtement anti-reflet, etc.

La présente invention concerne également un procédé d'isolation ou de fabrication de collecteur solaire tel que défini selon l'objet de la revendication 1.

L'insufflation se fait dans le ou les espaces à isoler, comme évoqué précédemment, dans l'espace entre le circuit transportant le fluide caloporteur et une paroi adjacente, en particulier la paroi formant le fond du collecteur, ou face arrière, cette insufflation se faisant en particulier au travers d'au moins une ouverture présente ou pratiquée dans l'enceinte du collecteur, par exemple une ouverture pratiquée sur l'un des côtés (ou faces latérales entre la face arrière et la face avant) ou à la jonction entre l'un des côtés et le fond du collecteur, cette ouverture faisant face à l'espace à isoler entre le circuit transportant le fluide caloporteur et la paroi adjacente. Le cas échéant cette ouverture peut être pratiquée ou prévue par perforation ou découpe, destinée le cas échéant à être obturée après remplissage par l'isolant formé des flocons/nodules, dans le côté concerné, ou simplement en écartant d'un côté la feuille, pouvant le cas échéant présenter une certaine souplesse par rapport au cadre, ou la plaque formant la face arrière du collecteur, du cadre formant les côtés dudit collecteur, avant remise en place. Une seule ouverture est généralement suffisante pour procéder à l'insufflation selon l'invention. L'insufflation se fait par l'intermédiaire d'une machine de soufflage reliée à une buse à insérer dans l'ouverture concernée, comme décrit ultérieurement.

L'insufflation se fait sans ajout (ou sans ajouter), pendant l'insufflation, de liant ni d'eau, ou en d'autres termes, on insuffle dans le ou lesdits espaces des flocons et/ou nodules de laine(s) et/ou fibres minérale(s) libres et secs, comme précisé ultérieurement.

Les flocons ou nodules de laine(s) ou fibres minérale(s) utilisés selon l'invention sont des fibres en paquets ou des amalgames (tridimensionnels), ou agrégats ou touffes ou mèches ou bouloches, de fibres, dans lesquels les fibres sont généralement enchevêtrées, et non des fibres individualisées, les flocons (présentant généralement un aspect duveteux ou cotonneux) étant des produits habituellement utilisés dans les combles perdus de maisons neuves ou à rénover pour former une barrière isolante. Dans la présente invention ils permettent de remplir tout l'espace entre le circuit de transport du fluide caloporteur et une paroi adjacente en suivant bien le contour dudit circuit, en éliminant ainsi les ponts thermiques et améliorant la résistance thermique obtenue, comme reprécisé ultérieurement.

Les flocons ou nodules utilisés selon la présente invention sont en laine(s) minérale(s) (soufflée(s)/ du type à souffler) et/ou fibres minérales ; on utilise par exemple des flocons en laine de verre (ou laine de verre en flocons) commercialisés par les sociétés Saint-Gobain Isover sous la marque Comblissimo^{®} ou par la société Certainteed sous la marque Optima^{®}, ou des flocons en laine de roche (ou laine de roche en flocons) commercialisés par la société Saint-Gobain Eurocoustic sous la référence "Coatwool HP^{®}".

Ces flocons ou nodules peuvent être produits à partir de fibres minérales formées selon des procédés connus, les fibres pouvant ensuite être mises en nodules ou paquets (directement après étirage ou ultérieurement), par exemple comme expliqué dans le document FR-A-2 661 687.

Ils peuvent également être obtenus par broyage à partir de tout matériau à base de laine(s) minérale(s), par exemple à partir de feutres ou matelas de laine minérale (en particulier à faible taux de composants pouvant se dégrader à haute température), tels que ceux décrits notamment dans les documents EP-A-0 403 347, EP-A-0 819 788, DE-A-39 18 485.

Le broyage pour obtenir les flocons ou nodules, ou le choix des flocons/nodules, est effectué de façon que ces flocons/nodules aient une taille inférieure à 50 mm, de préférence inférieure à 30 mm, quelle que soit la forme de ces flocons/nodules, en particulier comprise, pour au moins 50 % (en poids), et de préférence au moins 75%, des flocons, entre 5 et 25 mm, pour permettre une insufflation et un remplissage particulièrement efficaces.

On appelle taille d'un flocon ou nodule son diamètre équivalent, c'est-à-dire le diamètre de la sphère qui se comporterait de manière identique lors de l'analyse granulométrique des flocons/nodules, la distribution granulométrique (ensemble des tailles de particules) étant mesurée en particulier par tamisage, par exemple à l'aide d'un dispositif de tamisage automatique commercialisé sous la référence RX-24 par la société Retsch Sieve Shaker, en superposant 4 tamis (de celui présentant la plus petite taille de trou posé en premier sur le support vibrant jusqu'à celui présentant la plus grande taille de trous posé en dernier, les tailles de trous (carrés) étant successivement (en partant du bas) de 6 mm de côté, 10 mm de côté, 19 mm de côté et 25 mm de côté), la puissance étant réglée à 65% et le temps de tamisage étant de 5 min pour 10 à 12 g de produit, la masse de flocons/nodules présente dans chaque tamis étant ensuite pesée. En particulier de 30 à 75% en poids des flocons/nodules utilisés dans la présente invention présentent une taille comprise entre 10 et 25 mm, et entre 5 et 30% en poids de ces flocons/nodules présentent une taille inférieure à 6 mm.

Les flocons ou nodules sont de préférence à base de laine(s) et/ou fibres minérale(s) fine(s) pour de bonnes performances d'isolation. De façon particulièrement avantageuse selon l'invention, on utilise des flocons et/ou nodules de (ou en) laine(s) (ou fibres) de verre, avec un micronaire de préférence inférieur à 27 l/min, notamment compris entre 3 et 18 l/min, ou des flocons et/ou nodules de laine(s) (ou fibres) de roche, avec un fasonaire de préférence supérieur à 150 mmce et inférieur à 350 mmce (milimètres colonne d'eau), notamment compris entre 200 et 350 mmce.

La finesse des fibres de verre est souvent déterminée par la valeur de leur micronaire (F) sous 5 g. La mesure du micronaire appelée aussi " indice de finesse " rend compte de la surface spécifique grâce à la mesure de la perte de charge aérodynamique lorsqu'une quantité donnée de fibres est soumise à une pression donnée d'un gaz - en général de l'air ou de l'azote. Cette mesure est usuelle dans les unités de production de fibres minérales, elle est réalisée selon la norme DIN 53941 ou ASTM D 1448 et utilise un appareil dit « appareil micronaire ».

Toutefois un tel appareil présente une limite de mesure quand les fibres utilisées sont fines. Pour des fibres très fines, il est possible et préférable de mesurer la finesse (ou le "micronaire") en l/min grâce à une technique connue et décrite dans la demande de brevet WO2003/098209. Cette demande de brevet concerne un dispositif de détermination de l'indice de finesse de fibres comportant un dispositif de mesurage de l'indice de finesse, ledit dispositif de mesurage étant pourvu d'au moins un premier orifice relié à une cellule de mesure adaptée pour recevoir un échantillon constitué d'une pluralité de fibres (dans le cas présent un échantillon des flocons ou nodules), et d'un second orifice relié à un dispositif de mesurage d'une pression différentielle située de part et d'autre dudit échantillon, ledit dispositif de mesurage de la pression différentielle étant destiné à être relié à un dispositif de production d'écoulement de fluide, le dispositif de mesurage comportant en outre au moins un débitmètre volumétrique du fluide traversant ladite cellule. Ce dispositif donne des correspondances entre des valeurs " micronaire" et des litres par minute (l/min).

Le fasonaire est pour sa part déterminé de la façon suivante : on pèse une éprouvette (5g) constituée par une touffe de laine minérale (dans le cas présent un échantillon des flocons ou nodules) exempte d'huile et de liant mais pouvant comporter des composants non fibreux (slug). Cette éprouvette est comprimée dans un volume donné et est traversé par un courant de gaz (air sec ou azote) maintenu à débit constant. La mesure de fasonaire est alors la perte de charge à travers l'éprouvette, évaluée par une colonne d'eau graduée en unité conventionnelle. Classiquement, un résultat de fasonaire est la moyenne des pertes de charge observées pour dix éprouvettes, la mesure s'exprimant en millimètres de colonne d'eau (mmce).

Outre les flocons et/ou nodules, l'isolant ou la couche isolante au sein du collecteur, ou le flux insufflé pour obtenir ledit isolant/ladite couche, peut également comprendre d'autres composés, en particulier solides, notamment d'autres types d'isolants, afin d'améliorer encore les performances d'isolation ou d'autres performances (amélioration des propriétés anti-feu par exemple).

En particulier et avantageusement, l'isolant, ou la matière insufflée pour obtenir l'isolant, peut également comprendre des aérogels, préférentiellement présents et/ou insufflés sous forme particulaire, ou de petites parties ou particules ou billes. Ces composés, le cas échant de plus petite taille que les flocons et nodules utilisés selon l'invention, peuvent également contribuer à améliorer l'isolation obtenue en venant le cas échéant combler les interstices laissés par les flocons ou nodules. Les aérogels sont des isolants généralement plus performants, mais coûteux, pouvant se présenter notamment sous forme de granules translucides ou de poudre fine. L'insufflation des flocons/nodules pour former l'isolant rend possible cet ajout d'aérogels, l'insufflation des aérogels seuls posant par contre des problèmes, notamment en terme de sécurité et de poussières. Les aérogels utilisés le cas échéant avec les flocons ou nodules selon l'invention sont avantageusement des aérogels inorganiques, en particulier à base d'oxydes, tels que des aérogels à base de silice, d'aluminium et/ou de titane, et de préférence sont un ou des aérogels de silice sous forme de particules ou granulés ou billes ou poudre. Avantageusement la taille des particules d'aérogels pouvant être utilisés selon l'invention est comprise entre 1 et 5 mm, et leur taux au sein de l'isolant ou de la matière projetée pour former l'isolant n'excède pas de préférence 60% en poids (les aérogels étant généralement plus lourds que les flocons).

L'isolant selon l'invention, ou la matière ou le flux (de matière(s)) insufflé(e) pour former l'isolant, peut également le cas échéant comprendre un ou plusieurs additifs tels que des additifs anti-statique, des huiles, etc. à des taux avantageusement inférieurs à 1% en poids (pour l'ensemble des additifs).

Le cas échéant, les flocons/nodules peuvent jouer le rôle de porteurs de ces additifs ou d'autres composés et les répartir ainsi de façon homogène dans l'espace à isoler.

L'isolant selon l'invention, de même que les flocons ou nodules de laine(s) ou fibres minérale(s) utilisés selon l'invention, de même que le flux de matière projeté pour former l'isolant, comprennent de préférence un taux de composés organiques (issus par exemple de liant(s) ou d'additifs ajoutés lors de la fabrication des fibres ou des matelas de fibres transformés ensuite en flocons ou nodules) inférieur à 4%, en particulier inférieur à 1.5% en poids, et sont avantageusement dénués de composé(s) organique(s), permettant notamment de limiter les risques d'émission d'odeurs et de polluants (COV).

De par le procédé d'isolation utilisé, même si la présence de tels agents n'est pas exclue, il n'est notamment pas nécessaire d'ajouter dans le flux insufflé, des agents anti-poussière, la poussière générée le cas échéant restant notamment confinée dans la présente invention dans l'espace intérieur isolé. Le taux d'agents anti-poussière (comme les huiles minérales ou les agents antistatiques) dans l'isolant ou la matière insufflée est ainsi de préférence inférieur à 1% en poids, et avantageusement l'isolant ou la matière insufflée est dénué(e) d'agent(s) anti-poussières, permettant de limiter encore les risques d'émission d'odeurs et de polluants.

Selon l'invention, l'isolant formé des flocons et/ou nodules de (ou en) laine(s) ou fibres minérale(s) comprend également un taux de liant, qu'il soit organique et/ou inorganique, inférieur à 4% en poids, et un taux d'eau inférieur à 2% en poids, l'isolant étant de préférence dénué de liant(s) et étant de préférence sec ou dénué d'eau, l'eau provenant essentiellement de l'humidité dans l'air comme précisé ultérieurement.

Le circuit transportant le fluide caloporteur du collecteur selon l'invention est généralement formé par un tube ou des tubes ou serpentin(s), en particulier métallique(s), par exemple en cuivre, généralement de faible diamètre (par exemple de l'ordre de 10 à 15 mm de diamètre), disposé(s) en formant des lacets (ou sinuosités ou méandres ; on parle également de circuit de type échelle ou grille, formé de réseau(x) ou rangées de tubes généralement parallèles et reliés les uns aux autres) allant d'un côté à l'autre du collecteur suivant un plan généralement parallèle aux faces avant et arrière du collecteur, ce circuit ou réseau de tube(s) ou serpentin(s) couvrant une surface s'étendant généralement pratiquement d'un bord à l'autre du collecteur dans chaque direction. Ce circuit, généralement rigide, forme notamment un tapis ou plan de dimensions appropriées pour rentrer dans l'enceinte du collecteur, ce circuit ou tapis ou plan de tube(s) étant généralement (notamment dans le cas d'un collecteur de type plan vitré) au contact d'au moins un absorbeur ou surface absorbante ou élément absorbeur, c'est-à-dire destiné(e) à absorber l'énergie solaire, par exemple sous forme d'une plaque ou feuille, notamment métallique, par exemple en cuivre, recouverte le cas échéant pour un meilleur rendement d'un revêtement, par exemple un revêtement dit sélectif, tel qu'un revêtement en oxyde de nickel ou oxyde de chrome, ou traitée, cet absorbeur étant le cas échéant collé ou soudé sur le circuit et l'ensemble pouvant être monté d'une pièce dans le collecteur, ou cet absorbeur pouvant être monté indépendamment, l'absorbeur étant placé dans le collecteur entre le circuit et la face du collecteur (la vitre dans le cas d'un collecteur de type plan vitré) recevant la lumière/l'énergie du soleil.

Le fluide caloporteur utilisé, même si l'air n'est pas exclu, est dans la plupart des cas liquide. Il s'agit en particulier d'eau, ou éventuellement d'un fluide à changement de phase ou encore d'une huile, le fluide étant le plus souvent de l'eau, ce fluide étant le cas échéant mélangé à un anti-gel, par exemple de type mono-propylène glycol.

Le fluide, en particulier liquide, parcourt le circuit (ou circuit hydraulique) en faisant des aller-retour du fait de la forme en serpentin du circuit et s'échauffe, en particulier au contact du ou des absorbeurs, sous l'effet de la chaleur, le cas échéant transmise par le ou les absorbeurs, issue du rayonnement solaire, l'énergie thermique ainsi captée n'étant pas perdue par d'autres transferts vers l'arrière du collecteur du fait de la présence de l'isolant.

Comme vu précédemment, l'ensemble précédent (circuit, absorbeur(s) et isolant) se trouve avantageusement dans une enceinte délimitant le collecteur, ou caisson ou coffre, en une ou plusieurs parties, le cas échant étanche à l'eau ou rendu(e) étanche à l'eau une fois le collecteur monté ou fabriqué, enceinte sur laquelle est en particulier fixé un vitrage ou vitre. Ce vitrage est transparent à la lumière du soleil et peut être muni d'un revêtement tel qu'un revêtement anti-reflet, pour piéger le cas échéant les rayons infrarouges une fois à l'intérieur, ce vitrage situé sur la face avant permettant également de réduire les déperditions de chaleur.

Les collecteurs solaires ainsi formés se présentent notamment sous forme de panneaux ou caissons fermés de différentes dimensions, lesquels peuvent ensuite être facilement posés, par exemple en toiture ou au sol ou sur une toiture. Les collecteurs peuvent aussi être proposés en kit ou éléments séparés à intégrer directement dans l'architecture des bâtiments. Les surfaces de ces collecteurs peuvent aller de quelques mètres carrés, par exemple pour les chauffe-eau solaires individuels, voire moins, à plusieurs centaines de mètres carrés, par exemple pour des installations collectives.

La fabrication des collecteurs selon l'invention se fait avantageusement par le procédé d'insufflation mentionné précédemment, l'insufflation, dans ou par un courant gazeux, des flocons et/ou nodules se faisant en voie sèche comme indiqué ci-après. Cependant, bien qu'elle réduise les inconvénients liés à la manipulation directe de la laine minérale, la technique en voie humide pose des problèmes de nettoyage du poste de travail, et il est difficile de contrôler la quantité de matériau déposée et notamment l'homogénéité de la densité du matériau appliqué, le séchage étant également plus coûteux en temps que celui nécessaire à la pose d'isolants traditionnels. On observe également des problèmes de coalescence des flocons pouvant entrainer une inhomogénéité de densité à certains endroits, la densité (ou masse volumique) de flocons obtenue n'excédant généralement pas en outre 60 kg/m³, limitant ainsi les performances d'isolation obtenues.

L'insufflation est effectuée dans la présente invention sans ajout (ou sans ajouter), pendant l'insufflation, de liant ni d'eau; en d'autres termes, on insuffle des flocons et/ou nodules de laine(s) et/ou fibres minérale(s) libres et secs.

Sans ajout de liant pendant l'insufflation s'entend dans la définition précédente comme signifiant sans ajout pendant l'insufflation de substance/composé(s) (en particulier sous forme liquide, voire solide) apte(s) à lier les flocons/nodules insufflés entre eux. Comme indiqué ultérieurement, la présence d'un composé traditionnellement qualifié de "liant" mais non susceptible de lier les flocons/nodules entre eux, par exemple d'un composé ou liant déjà réagi, notamment dans les flocons/nodules utilisés pour l'insufflation, n'est toutefois pas exclue. De préférence toutefois, les flocons/nodules insérés dans le dispositif d'insufflation sont dénués de liant(s) (même déjà réagi(s)), de même que le flux de matière insufflé(e), comme reprécisé ultérieurement.

L'insufflation des flocons et/ou nodules selon l'invention se fait donc sans ajout délibéré de liant (à pouvoir de liaison desdits flocons/nodules) ni d'eau, les flocons et/ou nodules insufflés dans l'espace à isoler étant donc "libres" ou séparables ou non liés entre eux par un liant, et lesdits flocons/nodules étant également secs, c'est-à-dire sans eau ajoutée notamment lors de l'insufflation, avec un taux d'humidité éventuelle (ou taux d'eau éventuel), dans lesdits flocons/nodules, ainsi que dans le flux de matière projeté(e), inférieur(e) à 2% en poids, notamment inférieur(e) à 1% en poids, par rapport au poids de la matière insufflée par le courant gazeux d'insufflation, l'humidité de l'air ambiant, en effet, pouvant notamment être absorbée dans la matière insufflée.

Cette insufflation peut notamment être qualifiée d'insufflation "séche" ou se faisant "à sec" ou "par voie sèche", sans milieu (notamment liquide) ajouté de type eau ou liant (organique ou inorganique), tout le flux (ou toute la matière) projeté(e) (formée au moins des flocons ou nodules mais pouvant également comprendre des composés additionnels comme des aérogels ou additifs, comme déjà indiqué) étant avantageusement dépourvu(e) d'eau et de liant ajouté(s). Par "ajouté", on entend ajouté au cours du procédé d'isolation dans le dispositif de projection/d'insufflation utilisé pour le dépôt de l'isolant/de la couche isolante, sur les flocons ou nodules avant qu'ils n'atteignent la partie à isoler et/ou dans le courant gazeux d'insufflation (par la même alimentation que les flocons ou nodules ou par une autre alimentation), sachant que, comme déjà évoqué, les flocons ou nodules peuvent de leur côté déjà comprendre avant leur insufflation un liant, notamment issu de leur procédé de fabrication et pouvant être présent à des taux inférieurs à 4% en poids de liant sec par rapport au poids desdits flocons ou nodules (tels qu'introduits dans le dispositif d'insufflation), ce liant étant dans ce cas non susceptible de les lier entre eux au cours de l'insufflation ou dans le produit obtenu car étant notamment déjà polymérisé ou réticulé ou cuit ou durci ou ayant déjà réagi. D'autres matières ou substances peuvent le cas échéant être ajouté(e)s lors de l'insufflation à partir du moment notamment où il ne s'agit pas de liants ou d'eau, en particulier d'autres isolants solides, ou des additifs en faibles proportions, comme indiqué ultérieurement.

Le flux de matière (formée de composants solides et éventuellement de composants liquides) insufflé dans le collecteur peut ainsi comprendre dans ce mode de réalisation (voie sèche), outre les flocons et/ou les nodules de laine(s) et/ou fibres minérale(s) :
- moins de 2%, de préférence moins de 1%, en poids (par rapport au poids de la matière insufflée par le courant gazeux d'insufflation) d'humidité/ d'eau, provenant essentiellement de l'air ambiant (par équilibre hygroscopique),
- moins de 4% de liant dénué de pouvoir de liaison (ou inapte à lier) des flocons et/ou nodules entre eux, provenant essentiellement du procédé de fabrication des flocons et/ou nodules et se trouvant déjà sur et/ou dans les flocons introduits dans le dispositif d'insufflation, ce liant étant déjà polymérisé ou réticulé ou cuit ou durci ou ayant déjà réagi,
- éventuellement un ou des autres composants dans la mesure où il ne s'agit pas de liant(s) encore apte(s) à lier les flocons/nodules entre eux et dans la mesure où il ne s'agit pas de composant(s) renfermant de l'eau (ce(s) composant(s) étant donc dénué(s) d'eau), en particulier:
   - un ou des matériaux isolants additionnels, en particulier sous forme de particules, notamment des aérogels,
   - un ou des additifs, en faible proportion, notamment à moins de 1% en poids (par rapport au poids de la matière insufflée par le courant gazeux d'insufflation), et de préférence à moins de 0.5% en poids, par exemple un ou des additifs de type huile minérale, anti-statique, silicone, etc.

Le flux (ou la matière) insufflé(e) (ou projeté(e)) est ainsi avantageusement essentiellement (de préférence à au moins 98% en poids de la matière projetée formant la couche isolante, et jusqu'à 100% en poids) formé(e) de matière sèche (également majoritairement, ou essentiellement, solide ou formée, ou constituée, de particules solides), formée notamment des flocons et/ou nodules précités, véhiculés par le courant gazeux, et venant remplir l'espace à isoler pour former une barrière isolante (sous forme d'au moins une couche isolante) thermiquement. Un ou des composants liquides, notamment un ou des additifs, peuvent le cas échéant être présents, par exemple une ou des huiles minérales, le taux de ces composants ou additifs liquides étant préférentiellement inférieur à 1% en poids, comme vu précédemment, notamment inférieur à 0.5% en poids, par rapport au poids de matière projetée, ce taux étant préférentiellement nul, le courant gazeux ne projetant préférentiellement que des particules solides, avantageusement formées pour l'essentiel (à au moins 95% en poids) voire uniquement, de matériaux isolants, lesdits matériaux isolants comprenant au moins les flocons ou nodules de laine(s) minérale(s) et/ou fibres minérales précités.

S'il n'est pas exclu dans la présente invention que les flocons ou nodules utilisés incorporent déjà un liant (déjà réagi), organique ou inorganique, issu en particulier de leur procédé de fabrication, le taux de celui-ci n'excède pas 4% en poids comme indiqué précédemment, ce liant éventuellement présent étant de préférence inorganique ou minéral. De préférence les flocons ou nodules utilisés sont choisis dénués de liant, de même qu'ils sont dénués d'eau (l'eau résiduelle éventuelle provenant le cas échéant de l'humidité ambiante).

La présente invention concerne également un dispositif d'insufflation particulièrement adapté pour la mise en œuvre du procédé selon l'invention, comme décrit ultérieurement.

La structure des flocons ou nodules et l'insufflation selon l'invention dans l'espace à isoler, en particulier dans l'espace, ou la cavité ou la partie, entre le circuit de transport du fluide caloporteur et l'arrière ou le fond du collecteur, permettent l'obtention d'une couche isolante de dimensions adaptées à cet espace, les flocons/nodules encapsulant notamment le circuit où serpentin(s) dans lesquels le fluide circule et permettant également de bien isoler les bords de la cavité (évitant l'utilisation de mousse isolante sur le cadre ou les montants du collecteur et simplifiant notamment la pose), permettant ainsi d'éliminer les problèmes de ponts thermiques et d'améliorer les performances d'isolation obtenues. En outre le couplage possible avec d'autres isolants, tels que des aérogels, permet d'améliorer encore les performances notamment thermiques, voire d'autres performances, par exemple acoustiques ou anti-feu, de l'isolation.

L'utilisation des flocons ou nodules, en particulier libres et secs, et l'insufflation opérée, permettent également de s'affranchir des limites techniques des lignes de fabrication des isolants de type mousse ou matelas de laine minérale, et permettent notamment d'obtenir au besoin des couches d'isolants de densités plus grandes que celles obtenues avec des procédés préexistants, ou le cas échéant que celles obtenues par voie humide, le procédé et le dispositif préférés en voie sèche rendant notamment possible le travail à plus haute pression, les flocons ou nodules se répartissant dans tous les recoins de la cavité à isoler sans risques de coalescence.

L'utilisation des flocons ou nodules, en particulier libres et secs, et l'insufflation opérée permettent également de s'affranchir de toute étape de séchage ou de traitement de l'isolant une fois déposé et pour autant ne présente pas non plus, même en l'absence de liant ou d'eau ou d'anti-poussière, de problèmes liés à l'envol de poussières (l'isolant étant confiné dans un espace fermé); le procédé est par conséquent rapide et ne nécessite pas d'interruption de la chaîne de fabrication, de même qu'il présente peu de risques liés à la manipulation de fibres minérales. Il permet également de conserver la propreté du collecteur et de sa face avant, et ainsi une meilleure efficacité du collecteur.

De plus, l'absence, , de liant ou d'eau n'affecte pas de façon surprenante les propriétés de l'isolant obtenu et il n'est pas non plus nécessaire de lier les flocons ou nodules par un autre traitement, de même qu'il s'avère également non nécessaire d'ajouter des agents anti poussières, éliminant de ce fait tout risque d'émission d'odeurs ou de polluants de l'air générés par ces types d'agents ou liants lors du fonctionnement du collecteur, de même que cela permet d'éviter tout phénomène de dégazage ou de brouillard pouvant salir le collecteur, en particulier sa face avant ou sa partie vitrée, et entraver son efficacité (en diminuant notamment la transmittance de ladite partie vitrée et donc le rendement du collecteur).

Les flocons ou nodules de laine(s) ou fibres minérale(s) et les autres composants éventuels de la matière insufflée sont amenés et introduits dans l'espace à isoler par l'intermédiaire de dispositif(s) d'insufflation comprenant au moins un diffuseur (ou injecteur ou buse) et au moins un conduit/canal d'amenée, connecté(s) à une machine de soufflage. Par cette introduction, les risques d'envol de poussières sont réduits voire supprimés, rendant ainsi le poste de travail plus agréable pour l'opérateur et moins coûteux en entretien. L'introduction dans un espace intérieur délimité par une ou des parois permet de définir la forme de la couche isolante au moment même où elle est appliquée dans l'espace interne à isoler tout en contrôlant son épaisseur, la couche déposée étant ensuite protégée par lesdites parois ou dans ledit espace intérieur.

Le cas échéant, certaines évacuations peuvent être présentes dans les parois délimitant l'espace à isoler, par exemple sous forme de trou(s) percés dans les parois latérales ou le cadre du collecteur, ces trous ou ouverture étant en particulier de taille inférieure à celle des flocons ou nodules ou autre isolants présents le cas échéant, ou encore étant munis de filtre(s) (tel(s) qu'un voile de verre) pour arrêter les isolants tout en laissant passer le gaz, afin de permettre une meilleure évacuation du gaz d'insufflation et d'éviter des zones d'accumulation des isolants. Le gaz d'insufflation utilisé est de préférence de l'air.

Le procédé selon l'invention permet d'obtenir des couches isolantes présentant déjà leur forme définitive, sans nécessiter de mise en forme additionnelle, l'insufflation par voie sèche permettant également d'utiliser des débits d'insufflation supérieurs à ceux utilisés/atteints par voie sèche. On utilise en particulier des débits d'insufflation pouvant atteindre 200 g/s, notamment de l'ordre de 50 à 200 g/s, la densité (ou masse volumique) obtenue pour la couche isolante pouvant quant à elle aller jusqu'à 100 ou 120 kg/m³, la densité obtenue pouvant notamment être comprise entre 10 et 100 kg/m³, en particulier entre 25 et 80 kg/m³ en voie sèche, cette densité étant de préférence supérieure à 25 kg/m³. La pression de gaz d'insufflation peut quant à elle atteindre 500 mbar, et est généralement comprise entre 70 et 250 mbar, en fonction du volume à remplir et de la densité souhaitée.

De préférence dans le procédé selon l'invention, le courant gazeux d'insufflation est dirigé sensiblement parallèlement au plan médian de l'espace à isoler, en particulier parallèlement aux faces avant et/ou arrière du collecteur, avec un angle entre le courant d'insufflation (ou flux insufflé) et le plan ou la surface considéré(e) compris entre +5° et -5°, afin d'obtenir un remplissage homogène et, le cas échéant, suffisamment dense, et afin également d'éviter le retour de flocons/nodules vers la buse d'insufflation, pouvant éventuellement boucher cette dernière.

La matière insufflée dans l'espace peut être insufflée à partir d'un point fixe, en particulier une ouverture latérale comme précédemment évoqué, ou éventuellement depuis un point mobile (la buse bougeant par exemple en translation le long de l'espace à isoler) de façon que le remplissage de la cavité se fasse progressivement d'une extrémité de la cavité à l'autre.

La présente invention concerne également un dispositif d'insufflation particulièrement adapté pour la mise en œuvre du procédé selon l'invention.

Le dispositif d'insufflation utilisé comprend notamment au moins un diffuseur (ou injecteur ou buse) de section de sortie apte à s'encastrer (ou s'emboiter) dans au moins une partie ou la totalité d'une ouverture débouchant sur l'espace interne à isoler de façon que le flux sortant du diffuseur soit essentiellement parallèle (ou tangent) au plan médian dudit espace (ou encore plan médian par rapport aux parois latérales dudit espace).

Par "essentiellement parallèle " on entend parallèlement au plan considéré, avec une tolérance de l'angle entre le courant d'insufflation (ou flux insufflé ou flux sortant du dispositif) et le plan considéré comprise entre +5° et -5°.

Le dispositif peut comprendre également au moins un mélangeur (ou organe, ou système, ou moyen, de mélange. Le mélangeur est en particulier un manchon de forme appropriée permettant selon les cas d'homogénéiser le débit de flocons/nodules dans la section droite du conduit amenant lesdits flocons/nodules de la machine de soufflage jusqu'au diffuseur. Le mélangeur permet également d'homogénéiser les différents composants du flux (par exemple les flocons et des aérogels). Ce mélangeur, dont le relief intérieur est par exemple choisi pour permettre le mélange des composants et l'orientation du flux, est en particulier un mélangeur dit "statique" ou "convergent".

Le diffuseur peut être apte à s'insérer ou s'encastrer dans la totalité de/sur toute la surface ou section d'une ouverture de l'espace à isoler, par exemple une ouverture pratiquée sur l'un des côtés du collecteur, notamment en l'un de ces plus petits côtés, ou peut être apte à s'insérer dans une partie seulement de ladite ouverture (de préférence une partie importante, en particulier peut occuper au moins 50% de la surface de ladite ouverture), et peut être apte à coulisser le long de l'espace considéré de façon notamment que le remplissage de l'espace se fasse progressivement par déplacement (par exemple en translation) du diffuseur dans ledit espace. Le diffuseur peut aussi le cas échéant être fixe. L'ouverture, de même que la section de passage ou de sortie du diffuseur, peut être relativement large (par exemple de quelques dizaines de cm de largeur, par exemple 50 cm) pour couvrir d'emblée une grande section de l'espace à isoler (la hauteur de l'ouverture et/ou de la section de passage ou de sortie du diffuseur étant pour sa part préférentiellement limitée à quelques centimètres, par exemple de l'ordre de 3 cm), ou le cas échéant le diffuseur peut être placé dans une ouverture de faible diamètre pratiquée ou prévue à cet effet dans une paroi extérieure du collecteur en face de l'espace à isoler (par exemple l'ouverture et/ou la section de passage ou de sortie du diffuseur peut être de diamètre inférieur à 50 ou 30 mm), ce mode opératoire étant intéressant en particulier lorsqu'il s'agit de refaire l'isolation d'un collecteur déjà fabriqué.

Le diffuseur peut notamment être plat (ou à section de passage ou de sortie plate, en particulier rectangulaire), ou il peut présenter une section de passage ronde ou ovale, par exemple lorsqu'il est destiné à être placé dans une ouverture de faible diamètre pratiquée ou prévue dans une paroi extérieure du collecteur.

De préférence, les diffuseurs utilisés présentent une hauteur (dans le cas de diffuseurs plats) ou un diamètre intérieur (dans le cas de diffuseurs à section ronde) de canal (ou section de passage des flocons/nodules) compris(e) entre 12 et 45 mm. Dans le cas de diffuseurs à section ovale, le plus petit axe de la section transversale du canal présente également préférentiellement une longueur entre 12 et 45 mm.

Outre le(s) diffuseur(s) et le cas échéant le(s) mélangeur(s), le dispositif d'insufflation selon l'invention peut également comprendre d'autres composants, par exemple une ou des poignées ou un autre système pour manipuler les diffuseurs. Il comprend en outre ou est raccordé à une machine de soufflage, par exemple une machine de soufflage telles que celles commercialisées sous les références Fibermaster MK700, 750 ou 1000 par la société Steward Energy, ou sous les références ISO 400 ou ISO 300 par la société Isol France, ou sous les références X-Floc Zellofant M95, ou EM320 ou 325 (par la société X-Floc), ou sous la référence Volu-matic par la société Certainteed MachineWorks.

D'autres caractéristiques et avantages de l'invention apparaîtront à la lecture des exemples qui suivent illustrant l'invention sans toutefois la limiter, en présentant les résultats obtenus pour des collecteurs isolés thermiquement selon la présente invention en comparaison avec un exemple de référence portant sur des collecteurs de même structure à l'exception de l'isolant, l'isolation étant faite dans l'exemple de référence en insérant un isolant traditionnel pour collecteur solaire.

La fabrication des collecteurs selon la présente invention est en parallèle illustrée, de façon non limitative dans les dessins annexés dans lesquels :
- la figure 1a représente une vue partielle schématique d'un collecteur solaire et d'une partie d'un dispositif d'insufflation selon l'invention positionnés en vue de procéder à l'insufflation des flocons/nodules de laine(s)/fibres minérale(s).pour obtenir un collecteur solaire selon l'invention;
- la figure 1b représente une vue de l'intérieur de l'ensemble de la figure 1a pendant l'insufflation.
- la figure 1c représente, vu de côté par rapport aux figures précédentes, l'intérieur de l'ensemble de la figure 1a pendant l'insufflation.
- les figures 2a et 2b représentent des figures similaires aux figures 1a et 1b mais avec un dispositif d'insufflation présentant un diffuseur de section différente de celui illustré en figures 1a et 1b .

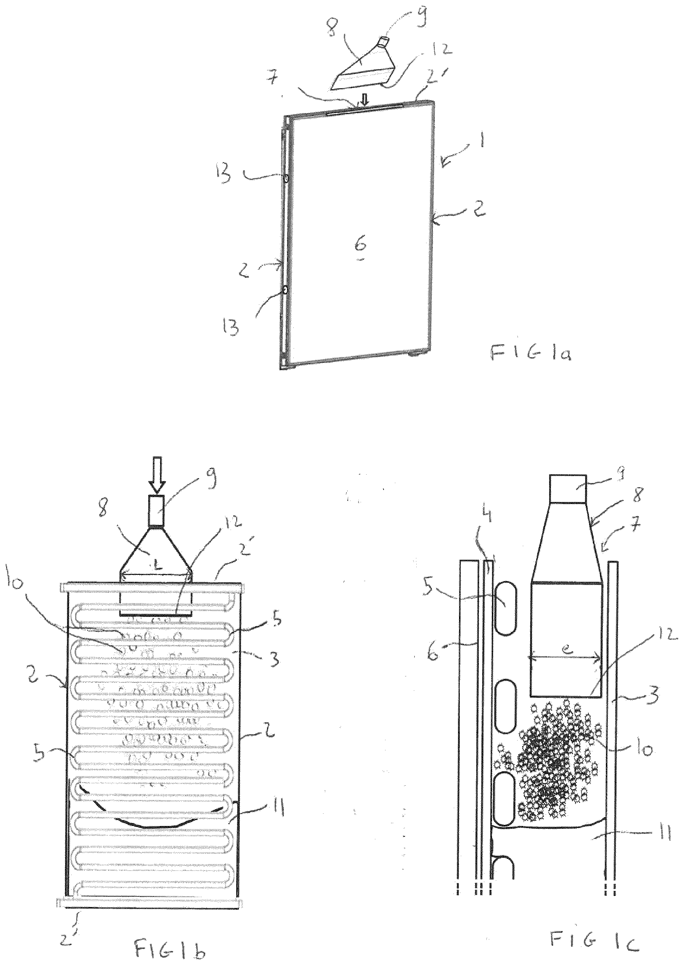

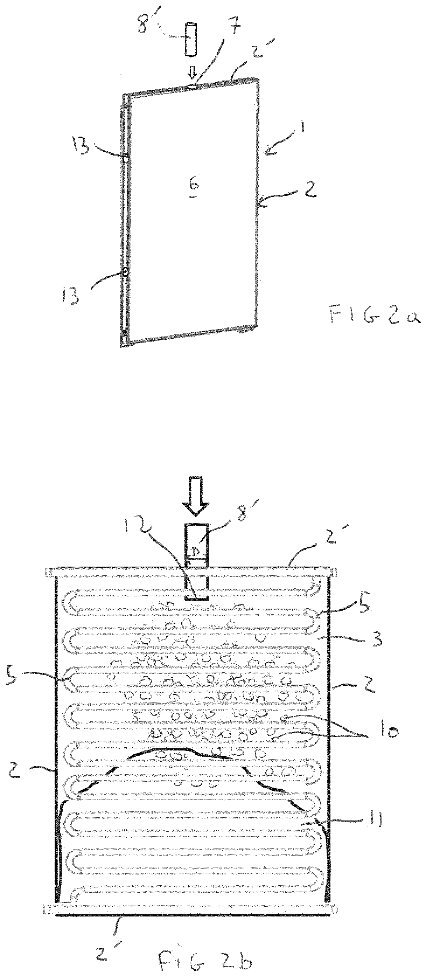

Exemple 1 selon l'invention :
Dans cet exemple, le collecteur (1) est formé d'une enceinte comprenant un cadre métallique (2) formé de profilés en aluminium extrudés et pliés, cadre sur lequel est rapporté un fond (3) sous la forme d'une tôle, par exemple en aluminium ou aluminium-zinc, l'ensemble étant maintenu par clinchage pour former ladite enceinte; un absorbeur (4) (cf. figure 1c) formé d'une feuille de cuivre munie d'un revêtement sélectif anti corrosion est en outre fixé à l'intérieur de l'enceinte, à l'aide de manchons en caoutchouc (par exemple de type EPDM ou silicone, ces manchons n'étant pas représentés sur les figures) montés dans le cadre en aluminium, cet absorbeur étant en outre rendu solidaire, notamment par soudure laser, d'un circuit (5) hydraulique (de type serpentin ou échelle ou grille) en cuivre destiné à transporter de l'eau, le circuit hydraulique faisant face au fond de l'enceinte et l'absorbeur faisant face à une plaque de verre (6) fermant le collecteur sur sa face opposée (à celle formée par le fond), la plaque de verre (non représentée, de même que que l'absorbeur, en figure 1b ou 2b, pour une meilleure compréhension, ladite plaque de verre venant recouvrir l'absorbeur qui lui-même recouvre le circuit hydraulique comme illustré en figure 1c) étant en particulier une plaque de 3 mm d'épaisseur de verre solaire trempé à faible teneur en fer et étant par exemple fixée à l'enceinte à l'aide d'adhésifs, l'étanchéité entre le vitrage et l'enceinte étant par exemple assurée par un joint (par exemple en EPDM, non représenté). En partant du fond du collecteur (3), on trouve donc successivement (avant ajout de l'isolant) le circuit hydraulique (5), l'absorbeur (4) et la vitre (6), l'espace laissé entre le fond et le circuit présentant une épaisseur d'environ 50 mm.

L'isolation est opérée comme suit selon l'invention:
On fixe le collecteur sur un support, par exemple vertical (comme illustré dans les figures, le support n'étant pas représenté), et l'on introduit entre la plaque arrière et l'ensemble circuit hydraulique/absorbeur, sur l'un des petits côtés (2') du cadre (tourné alors vers le haut dans le cas du collecteur fixé verticalement), à travers une ouverture (7) pratiquée donnant accès à l'espace ou tranche du collecteur à isoler entre la plaque arrière et le serpentin, un diffuseur plat (8) à section rectangulaire (par exemple de section de sortie de 50 cm de largeur (L) (figure 1b) et de 50 mm de hauteur (e) (figure 1c), l'échelle n'étant pas nécessairement respectée dans les dessins, en particulier la figure 1c étant agrandie pour une meilleure compréhension) ou un diffuseur à section ronde (8') ou ovale (par exemple de section de sortie de 20 mm de diamètre (D) (figure 2b) d'un dispositif d'insufflation, relié, par exemple par l'intermédiaire d'un manchon de connexion (9) à une machine de soufflage (non représentée) de référence Fibermaster MK500 commercialisée par la société Stewart Energy. Le diffuseur encastrable est préférentiellement orienté parallèlement à la plaque de verre et au fond du collecteur, un seul diffuseur étant suffisant pour effectuer l'isolation recherchée. Dans un mode alternatif, l'insufflation, notamment dans le cas de l'utilisation d'un diffuseur à section ronde, peut également se faire au travers d'une ouverture pratiquée dans le fond (3) ou l'arrière du collecteur.

La machine de soufflage comporte une alimentation en flocons de laine minérale, des organes, dits de "démottage", destinés à séparer les flocons qui sont usuellement commercialisés dans des sacs ou balles compactées, un ou des organes de convoyage des flocons (ou conduites), et une soufflerie qui dirige dans la ou les conduites un courant d'air sous pression.

On procède à l'insufflation, en voie sèche, des flocons/nodules de laine(s)/fibres minérale(s) (10) entre le fond du collecteur et l'ensemble circuit hydraulique/absorbeur jusqu'au remplissage de la cavité entre ledit fond et ledit ensemble (les flocons venant également combler les espaces vides entre les ondulations du serpentin et l'absorbeur), une coupure de pression automatique intervenant par exemple lorsque la colonne de flocons (11) atteint l'embout (12) du diffuseur pour arrêter l'insufflation, des trous (13) (par exemple de 10 mm de diamètre environ) ayant en outre été percés sur les montants du cadre pour permettre l'évacuation de l'air. L'ensemble des trous pratiqués sur l'enceinte du collecteur (pour l'insufflation et l'évacuation de l'air) peuvent ensuite être bouchés par des bouchons ou pastilles en caoutchouc ou silicone ou polyamide, etc.

Le débit d'insufflation utilisé est de l'ordre de 120 g/s, la pression au diffuseur avoisinant 200 mbar pendant l'insufflation. La répartition des flocons s'opère de façon homogène, la densité et l'épaisseur de la couche obtenues étant respectivement de l'ordre de 35 kg/m³ et de 50 mm, les flocons utilisés étant des flocons de laine de verre à souffler commercialisés par la société Saint-Gobain Isover sous la marque Comblissimo^{®} présentant un micronaire de 6 I/min, la valeur de conductivité thermique λ (mesurée en particulier selon la norme EN12667) obtenue étant de l'ordre de 35 mW.m⁻¹K⁻¹ pour la densité précitée de 35 kg/m³, le taux de liant et de composants organiques dans ces flocons (provenant de leur fabrication, l'insufflation se faisant en voie sèche), étant inférieur à 2%. La résistance thermique R obtenue, correspondant au rapport de l'épaisseur de l'isolant sur la conductivité thermique λ, est de 1.4 m².K /W.

La perte d'énergie hors du collecteur est en outre évaluée en déterminant la valeur du coefficient de perte du premier ordre a1 de la façon suivante : la puissance délivrée par le collecteur solaire est donnée par la relation suivante : P = q*ρ*Cp*(Ts-Te), dans laquelle q est le débit d'eau passant dans le circuit hydraulique (ici de l'ordre de 43l/h.m²), ρ est la densité de l'eau (fixée à 1000 kg/m³), Cp est la capacité thermique massique de l'eau (ici égale à 4186 J.kg⁻¹.K⁻¹), Te est la température de l'eau à l'entrée du collecteur et Ts est la température de l'eau en sortie du collecteur. Le rendement du collecteur η = (Puissance délivrée par le collecteur)/(Flux Solaire reçu par l'absorbeur), est mesuré pour différente valeur ΔT, où ΔT est la différence entre la température moyenne du fluide caloporteur dans le collecteur et la température ambiante extérieure, les mesures étant faites après 5h d'exposition sous un rayonnement incident Eo. En outre, conformément à la norme EN12975, la courbe expérimentale du rendement η du peut-être modélisée par une équation du type : η =Fx τx α-a1x(ΔT/ Eo)-a2x(ΔT²/ Eo), dans laquelle F est le facteur de rendement du capteur, τ est le facteur de transmission du vitrage, α est le facteur d'absorption de l'absorbeur et Eo est le rayonnement solaire incident (après 5h d'exposition). Pour simplification, le coefficient F* τ* α (rendement optique du collecteur) est pris égal à 0,8. En outre Eo = 800 W.m² avec une incidence directe du flux lumineux (Le flux solaire est mesuré par un capteur ayant la même inclinaison que le collecteur). La courbe de rendement expérimentale se présente sous la forme d'une courbe fonction de ΔT, d'ordonnée à l'origine F* τ* α (cas où ΔT=0). L'équation de la courbe η = f(ΔT) selon l'équation précédente est déterminée par régression linéaire, en faisant varier les facteurs a1 (déterminant la pente de la courbe) et a2 (déterminant l'inflexion de la pente de la courbe), jusqu'à ce que la courbe modélisée et la courbe expérimentale se superposent. La superposition des deux fixe les coefficients a1 et a2, qui sont respectivement les coefficients de perte d'ordre 1 et 2.

Le coefficient de perte du premier ordre a1 obtenu est de 3.12 W/m².K.

En outre le produit obtenu est classé A1 en terme de résistance au feu (selon la norme DIN 4102).

Exemple 2 selon l'invention.

On procède comme dans l'exemple précédent en remplaçant les flocons de laine de verre à souffler par des flocons de laine de roche commercialisés par la société Saint-Gobain Eurocoustic sous la référence "Coatwool HP^{®}" et présentant un fasonaire de 250 mmCE Les résultats obtenus sont les suivants : masse volumique insufflée de 45 kg/m³; épaisseur de couche de 50 mm (épaisseur de la cavité comme dans l'exemple précédent); conductivité thermique λ de l'ordre de 45 mW.m⁻¹K⁻¹; résistance thermique R de 1 m².K /W; coefficient de perte du premier ordre a1 de 3.34 W/m².K; et classement A1 en terme de résistance au feu.

### Exemple de référence.

Au lieu d'insuffler la couche isolante comme dans chacun des exemples précédents, on insère entre le fond et le serpentin une mousse de mélamine, commercialisée par le société BASF sous la référence Basotec, cette mousse étant traditionnellement utilisée pour l'isolation des collecteurs solaires cette mousse de 20 mm d'épaisseur et de 12 kg/m³ de densité présentant un profil ondulé afin d'occuper un plus grand espace entre le fond et l'ensemble circuit hydraulique/absorbeur, la conductivité thermique λ obtenue étant de l'ordre de 33 mW.m⁻¹K⁻¹, une laine minérale supplémentaire étant souhaitable pour assurer l'isolation du fond du collecteur, la mousse de mélamine ne remplissant pas tout l'espace entre le fond du collecteur et l'ensemble circuit hydraulique/absorbeur. La résistance thermique R obtenue est cette fois de 0.6 m².K /W, le coefficient de perte du premier ordre a1 étant de 3.92 W/m².K, les performances d'isolation obtenues étant par conséquent moins bonnes que dans les exemples selon l'invention.

Le classement en terme de résistance au feu est en outre bien moins bon (classe C).

Dans le cas des collecteurs obtenus selon l'invention, on observe ainsi une meilleure étanchéité et une amélioration des performances thermiques, l'isolation se faisant également de façon pratique et sans poussières. Le cas échéant, les performances thermiques peuvent encore être améliorées en ajoutant aux flocons des aérogels, par exemple des granulés d'aérogels de référence P300 commercialisés par la société Cabot, à raison par exemple de 30 à 60% en poids de la matière insufflée.

La présente invention permet de réaliser une nouvelle gamme de collecteurs solaires présentant une isolation et des performances améliorées, ces collecteurs pouvant être utilisés en tant que chauffe-eau solaires (eau chaude sanitaire, chauffage de bâtiment, individuel ou collectif, etc), ou d'autres applications (chauffage de piscines, de planchers, climatisation, etc).

## Revendications

1. Procédé d'isolation ou de fabrication d'un collecteur solaire, notamment pour l'obtention d'un collecteur (1), ledit collecteur étant formé d'au un moins espace à isoler se trouvant entre un circuit (5) transportant un fluide caloporteur et une paroi adjacente du collecteur, **caractérisé en ce qu'**on insuffle, dans le ou lesdits espaces à isoler, des flocons et/ou des nodules de laine(s) et/ou fibres minérale(s) (10), comme isolant, dans le collecteur, sans ajouter de liant ni d'eau.

2. Procédé selon la revendication 1, **caractérisé en ce que** les flocons et/ou nodules (10) ont une taille inférieure à 50 mm, de préférence inférieure à 30 mm, en particulier comprise, pour au moins 50 % en poids des flocons, entre 5 et 25 mm.

3. Procédé selon l'une des revendications 1 ou 2, **caractérisé en ce que** les flocons et/ou nodules (10) sont en laine(s) ou fibres de verre, avec un micronaire inférieur à 25 l/min, notamment compris entre 3 et 18 l/min, et/ou sont en laine(s) ou fibres de roche, avec un fasonaire supérieur à 150 mmce, notamment compris entre 200 et 350 mmce.

4. Procédé selon l'une des revendications 1 à 3, **caractérisé en ce que** le flux de matière insufflé comprend, outre les flocons et/ou les nodules de laine(s) et/ou fibres minérale(s) (10):
- moins de 2%, de préférence moins de 1%, en poids d'humidité,
- éventuellement moins de 4% de liant déjà polymérisé ou réticulé ou cuit ou durci ou ayant déjà réagi,
- éventuellement un ou des autres composants inaptes à lier les flocons/nodules entre eux et dénués d'eau, en particulier :
- un ou des matériaux isolants additionnels, en particulier sous forme de particules, notamment des aérogels,
- un ou des additifs, notamment à moins de 1% en poids, par exemple un ou des additifs de type huile minérale, anti-statique, silicone, etc.

5. Procédé selon l'une des revendications 1 à 4, **caractérisé en ce que** les flocons et/ou nodules (10) présentent moins de 4% en poids de liant, et sont de préférence dépourvus de liant, et **en ce que** le taux d'agents anti-poussière dans la matière insufflée est inférieur à 1% en poids, la matière insufflée étant de préférence dénuée d'agent(s) anti-poussières.

6. Procédé selon l'une des revendications 1 à 5, **caractérisé en ce que** le courant gazeux d'insufflation est dirigé sensiblement parallèlement au plan médian de l'espace à isoler, au plan médian de l'espace à isoler, en particulier parallèlement aux faces avant et/ou arrière du collecteur (1), avec un angle d'incidence du courant d'insufflation avec ledit plan compris entre +5° et -5°, le débit d'insufflation étant en outre de l'ordre de 50 à 200 g/s, et/ou la pression de gaz d'insufflation étant comprise entre 70 et 500 mbar.

7. Collecteur solaire (1), en particulier thermique, susceptible d'être obtenu par le procédé selon l'une des revendications 1 à 6, ledit collecteur (1) étant formé d'au moins un circuit (5) transportant un fluide caloporteur et d'au moins une paroi adjacente et d'au moins un isolant sous forme d'au moins une couche, ledit isolant se trouvant entre ledit circuit (5) transportant un fluide caloporteur et ladite paroi et **caractérisé en ce que** ledit isolant est formé de flocons et/ou nodules de laine(s) ou fibres minérale(s) (10) de taille inférieure à 50 mm et **en ce qu'**il comprend un taux de liant inférieur à 4% en poids, et un taux d'eau inférieur à 2% en poids, l'isolant étant de préférence dénué de liant(s) et étant de préférence sec.

8. Collecteur solaire selon la revendication 7, **caractérisé en ce que** le collecteur (1) est un collecteur plan vitré et comprend au moins un vitrage (6).

9. Collecteur solaire selon l'une des revendications 7 ou 8, **caractérisé en ce que** les flocons et/ou nodules (10) ont une taille inférieure à 30 mm, en particulier comprise, pour au moins 50 % en poids des flocons, entre 5 et 25 mm.

10. Collecteur solaire selon l'une des revendications 7 à 9, **caractérisé en ce que** les flocons et/ou nodules (10) sont en laine(s) ou fibres de verre, avec un micronaire inférieur à 25 l/min, notamment compris entre 3 et 18 l/min, et/ou sont en laine(s) ou fibres de roche, avec un fasonaire supérieur à 150 mmce, notamment compris entre 200 et 350 mmce.

11. Collecteur solaire selon l'une des revendications 7 à 10, **caractérisé en ce que** l'isolant comprend également des aérogels, en particulier sous forme particulaire.

12. Collecteur solaire selon l'une des revendications 7 à 11, **caractérisé en ce que** la densité de l'isolant est comprise entre 10 et 100 kg/m³, en particulier entre 25 et 80 kg/m³, cette densité étant de préférence supérieure à 25 kg/m³.

## Patentansprüche

1. Verfahren zum Isolieren oder Herstellen eines Solarkollektors, insbesondere zum Erhalten eines Kollektors (1), wobei der Kollektor aus mindestens einem zu isolierenden Raum ausgebildet ist, der sich zwischen einem Kreislauf (5), der ein Wärmeübertragungsfluid transportiert, und einer angrenzenden Wand des Kollektors befindet, **dadurch gekennzeichnet, dass** in den zu isolierenden Raum oder die zu isolierenden Räume Flocken und/oder Knötchen aus Mineralwolle(n) und/oder -fasern (10) als Isolationsmittel in den Kollektor eingeblasen werden, ohne dass weder Bindemittel noch Wasser hinzugefügt werden.

2. Verfahren nach Anspruch 1, **dadurch gekennzeichnet, dass** die Flocken und/oder Knötchen (10) eine Größe von weniger als 50 mm, vorzugsweise weniger als 30 mm aufweisen, die im Besonderen für mindestens 50 Gew.-% der Flocken zwischen 5 und 25 mm liegt.

3. Verfahren nach einem der Ansprüche 1 oder 2,
**dadurch gekennzeichnet, dass** die Flocken und/oder Knötchen (10) aus Glaswolle(n) oder -fasern mit einem Micronaire-Wert von weniger als 25 l/min sind, der insbesondere zwischen 3 und 18 I/min liegt, und/oder aus Steinwolle(n) oder -fasern mit einem Fasonaire-Wert von größer als 150 mmCE sind, der insbesondere zwischen 200 und 350 mmCE liegt.

4. Verfahren nach einem der Ansprüche 1 bis 3,
**dadurch gekennzeichnet, dass** der eingeblasene Materialstrom neben den Flocken und/oder den Knötchen aus Mineralwolle(n) und/oder -fasern (10) umfasst:
- zu weniger als 2 Gew.-%, vorzugsweise zu weniger als 1 Gew.-% Feuchtigkeit,
- gegebenenfalls zu weniger als 4 % bereits polymerisiertes oder vernetztes oder kalziniertes oder gehärtetes oder bereits reagiertes Bindemittel,
- gegebenenfalls eine oder andere Komponenten, die ungeeignet sind, die Flocken/Knötchen miteinander zu verbinden und frei von Wasser sind, im Besonderen:
- ein oder mehrere zusätzliche Isolationsmaterialien, im Besonderen in Form von Partikeln, insbesondere von Aerogelen,
- ein oder mehreren Additive, insbesondere mit weniger als 1 Gew.-%, zum Beispiel ein oder mehrere Additive vom Typ Mineralöl, Antistatikum, Silikon usw.

5. Verfahren nach einem der Ansprüche 1 bis 4,
**dadurch gekennzeichnet, dass** die Flocken und/oder Knötchen (10) weniger als zu 4 Gew.-% Bindemittel aufweisen und vorzugsweise frei von Bindemittel sind, und **dadurch, dass** der Staubschutzmittelanteil in dem eingeblasenen Material weniger als 1 Gew.-% beträgt, wobei das eingeblasene Material vorzugsweise frei von Staubschutzmittel(n) ist.

6. Verfahren nach einem der Ansprüche 1 bis 5,
**dadurch gekennzeichnet, dass** der Einblasgasstrom im Wesentlichen parallel zu der Mittelebene des zu isolierenden Raums, zu der Mittelebene des zu isolierenden Raums, insbesondere parallel zu der Vorder- und/oder Rückseite des Kollektors (1), gerichtet ist, mit einem Einfallswinkel des Einblasstroms mit der Ebene, der zwischen +5° und -5° liegt, wobei der Einblasdurchsatz ferner in der Größenordnung von 50 bis 200 g/s liegt und/oder der Druck des Einblasgases zwischen 70 und 500 mbar liegt.

7. Solarkollektor (1), im Besonderen ein thermischer Kollektor, der durch das Verfahren nach einem der Ansprüche 1 bis 6 erhalten werden kann, wobei der Kollektor (1) aus mindestens einem Kreislauf (5), der ein Wärmeübertragungsfluid transportiert, und mindestens einer angrenzenden Wand und mindestens einem Isolationsmittel in Form von mindestens einer Schicht ausgebildet ist, wobei sich das Isolationsmittel zwischen dem Kreislauf (5), der ein Wärmeübertragungsfluid transportiert, und der Wand befindet, und **dadurch gekennzeichnet, dass** das Isolationsmittel aus Flocken und/oder Knötchen aus Mineralwolle(n) und/oder -fasern (10) mit einer Größe von weniger als 50 mm ausgebildet ist, und **dadurch, dass** es einen Bindemittelanteil von weniger als 4 Gew.-% und einen Wassergehalt von weniger als 2 Gew.-% umfasst, wobei das Isolationsmittel vorzugsweise frei von Bindemittel(n) ist und vorzugsweise trocken ist.

8. Solarkollektor nach Anspruch 7, **dadurch gekennzeichnet, dass** der Kollektor (1) ein verglaster Flachkollektor ist und mindestens eine Verglasung (6) umfasst.

9. Solarkollektor nach einem der Ansprüche 7 oder 8,
**dadurch gekennzeichnet, dass** die Flocken und/oder Knötchen (10) eine Größe von weniger als 30 mm, die im Besonderen für mindestens 50 Gew.-% der Flocken zwischen 5 und 25 mm liegt, aufweisen.

10. Solarkollektor nach einem der Ansprüche 7 bis 9,
**dadurch gekennzeichnet, dass** die Flocken und/oder Knötchen (10) aus Glaswolle(n) oder -fasern mit einem Micronaire-Wert von weniger als 25 l/min sind, der insbesondere zwischen 3 und 18 I/min liegt, und/oder aus Steinwolle(n) oder -fasern mit einem Fasonaire--Wert von größer als 150 mmCE sind, der insbesondere zwischen 200 und 350 mmCE liegt.

11. Solarkollektor nach einem der Ansprüche 7 bis 10,
**dadurch gekennzeichnet, dass** das Isolationsmittel auch Aerogele, im Besonderen in Partikelform, umfasst.

12. Solarkollektor nach einem der Ansprüche 7 bis 11,
**dadurch gekennzeichnet, dass** die Dichte des Isolationsmittels zwischen 10 und 100 kg/m³, im Besonderen zwischen 25 und 80 kg/m³ liegt, wobei diese Dichte vorzugsweise größer als 25 kg/m³ ist.

## Claims

1. Process for insulating or manufacturing a solar collector, in particular for obtaining a collector (1), said collector being formed of at least one space to be insulated located between a circuit (5) transporting a heat transfer fluid and an adjacent wall of the collector, **characterized in that** flakes and/or nodules of mineral wool(s) and/or mineral fibers (10) are blown in said space or spaces to be insulated, as insulator, into the collector, without adding binder or water.

2. Process according to claim 1, **characterized in that** the flakes and/or nodules (10) have a size of less than 50 mm, preferably less than 30 mm, in particular comprised, for at least 50% by weight of the flakes, between 5 and 25 mm.

3. Process according to either of claims 1 and 2, **characterized in that** the flakes and/or nodules (10) are made of glass wool(s) or glass fibers, with a micronaire of less than 25 I/min, in particular between 3 and 18 I/min, and/or are made of rock wool(s) or rock fibers, with a fasonaire of greater than 150 mmcw, in particular between 200 and 350 mmcw.

4. Process according to one of claims 1 to 3, **characterized in that** the flow of blown material comprises, besides the flakes and/or nodules of mineral wool(s) and/or mineral fibers (10):
- less than 2%, preferably less than 1%, by weight of moisture,
- optionally less than 4% of binder already polymerized or crosslinked or cured or hardened or that has already reacted,
- optionally one or more other components incapable of binding the flakes/nodules together and free of water, in particular:
- one or more additional insulating materials, in particular in the form of particles, in particular aerogels,
- one or more additives, in particular at less than 1% by weight, for example one or more additives of mineral oil, antistatic, silicone, etc. type.

5. Process according to one of claims 1 to 4, **characterized in that** the flakes and/or nodules (10) have less than 4% by weight of binder, and are preferably free of binder, and **in that** the content of anti-dusting agents in the blown material is less than 1% by weight, the blown material preferably being free of anti-dusting agent(s).

6. Process according to one of claims 1 to 5, **characterized in that** the blowing gas stream is oriented substantially parallel to the mid-plane of the space to be insulated, to the mid-plane of the space to be insulated, in particular parallel to the front and/or rear faces of the collector (1), with an angle of incidence of the blowing stream with said plane of between +5° and -5°, the blowing flow rate additionally being of the order of 50 to 200 g/s, and/or the blowing gas pressure being between 70 and 500 mbar.

7. Solar collector (1), in particular thermal collector, that can be obtained by the process according to one of claims 1 to 6, said collector (1) being formed of at least one circuit (5) transporting a heat transfer fluid and at least one adjacent wall and at least one insulator in the form of at least one layer, said insulator being located between said circuit (5) transporting a heat transfer fluid and said wall, and characterized said insulator is formed of flakes and/or nodules of mineral wool(s) and/or mineral fibers (10) smaller than 50 mm in size and in that it comprises a binder content of less than 4% by weight, and a water content of less than 2% by weight, the insulator preferably being free of binder(s) and preferably being dry.

8. Solar collector (1) according to claim 7, **characterized in that** the collector (1) is a glazed flat-plate collector and comprises at least one glazing unit (6).

9. Solar collector according to either of claims 7 and 8, **characterized in that** the flakes and/or nodules (10) have a size of less than 30 mm, in particular comprised, for at least 50% by weight of the flakes, between 5 and 25 mm.

10. Solar collector according to one of claims 7 to 9, **characterized in that** the flakes and/or nodules (10) are made of glass wool(s) or glass fibers, with a micronaire of less than 25 I/min, in particular between 3 and 18 I/min, and/or are made of rock wool(s) or rock fibers, with a fasonaire of greater than 150 mmcw, in particular between 200 and 350 mmcw.

11. Solar collector according to one of claims 7 to 10, **characterized in that** the insulator also comprises aerogels, in particular in particulate form.

12. Solar collector according to one of claims 7 to 11, **characterized in that** that the density of the insulator is between 10 and 100 kg/m³, in particular between 25 and 80 kg/m³, this density preferably being greater than 25 kg/m³.
